# EUROPÄISCHE PATENTSCHRIFT

(11) **EP 3 814 139 B1**
(45) Veröffentlichungstag und Bekanntmachung des Hinweises auf die Patenterteilung: **08.12.2021**
(21) Anmeldenummer: 20702973.7
(22) Anmeldetag: 21.01.2020
(51) Int. Cl.: B32B 43/00, B23K 26/53, B32B 17/10

(54) **VORRICHTUNG UND VERFAHREN ZUM TRENNEN EINER VERBUNDSICHERHEITSGLASTAFEL**
APPARATUS AND METHOD FOR SEPARATING A COMPOSITE SAFETY GLASS PANEL
DISPOSITIF ET PROCÉDÉ DE SÉPARATION D'UN PANNEAU DE VERRE DE SÉCURITÉ FEUILLETÉ

(30) Priorität: 22.01.2019 DE 102019200757; 18.06.2019 DE 102019116560
(43) Veröffentlichungstag der Anmeldung: 05.05.2021
(73) Patentinhaber: HEGLA GmbH & Co. KG, 37688 Beverungen (DE)
(72) Erfinder: OSTENDARP, Heinrich, 42781 Haan (DE); RAINER, Thomas, 38855 Wernigerode, OT Minsleben (DE); LUSTER, Andreas, 06317 OT Neehausen / Volmaritz (DE); THIELE, Benjamin, 33100 Paderborn (DE)
(74) Vertreter: Dr. Solf & Zapf Patent- und Rechtsanwalts PartG mbB
(86) Internationale Anmeldenummer: PCT/EP2020/051441
(87) Internationale Veröffentlichungsnummer: WO 2020/152184

(56) Entgegenhaltungen:
- EP-B1- 2 550 129
- US-A- 5 674 414
- US-A1- 2010 196 624
- US-A1- 2016 136 846

## Beschreibung

Die Erfindung betrifft eine Vorrichtung zum Trennen einer Verbundsicherheitsglastafel entlang mindestens einer vorgebbaren Aufteilungslinie, insbesondere zum Heraustrennen einer Verbundsicherheitsglasscheibe. Die Verbundsicherheitsglastafel weist mindestens eine Verbundfolie und mindestens zwei Glastafeln auf, wobei die Verbundfolie zwischen den Glastafeln angeordnet ist und die Verbundfolie die Glastafeln miteinander verbindet. Die Vorrichtung weist ferner mindestens ein Trennmittel zum Trennen der Glastafeln, vorzugsweise Ritzen und anschließendes Brechen, entlang der mindestens einen Aufteilungslinie auf. Zudem weist die Vorrichtung mindestens ein Heizmittel auf, welches zum Aufheizen der Verbundlinie zumindest entlang der Aufteilungslinie dient.

Ferner betrifft die Erfindung ein Verfahren zum Trennen einer Verbundsicherheitsglastafel, wobei das Verfahren mindestens die nachfolgenden Verfahrensschritte umfasst:
- Trennen, insbesondere mechanisches Ritzen und Brechen, der beiden Glastafeln entlang mindestens einer vorgebaren Aufteilungslinie,
- Aufheizen der Verbundfolie entlang der Aufteilungslinie, insbesondere mit einem Heizmittel,
- Auseinanderziehen der Glastafeln entlang der Aufteilungslinie, insbesondere im Wesentlichen orthogonal zur Aufteilungslinie.

Unter einer Verbundsicherheitsglasscheibe versteht man im Allgemeinen eine aus zwei oder mehr Glastafeln mit gleicher oder unterschiedlicher Dicke ausgebildete Glasscheibe, wobei die Glastafeln durch eine Zwischenschicht aus Kunststoff miteinander verbunden sind. Spezielle Verbundsicherheitsglastafeln weisen z. B. eine erste Glastafel aus einem üblicherweise unbeschichteten Glas und eine zweite Glastafel aus einem zweiten, an der Außenfläche beschichteten, insbesondere mit einer Wärmeschutzschicht versehenen, Glas auf. Die beiden Glastafeln sind dabei mit einer Verbundfolie miteinander verklebt.

Bei Verbundsicherheitsglas besteht die Zwischenschicht zur Verbindung der einzelnen Glastafeln in der Regel aus einer elastischen, reißfesten Hochpolymerfolie, so dass beim Bruch der Glastafeln die Bruchstücke an der Verbundfolie haften bleiben. Dies mindert das Risiko von Schnitt- oder Stichverletzungen. Auch weist die Verbundsicherheitsglastafel nach dem Bruch eine Resttragfähigkeit auf.

Die Verbundfolie weist typischerweise eine Dicke von 0,38 mm und seinen Vielfachen, also 0,76 mm usw., auf. Neben Verbundfolien aus Polyvinylbutyral (PVB) werden in geringerer Verbreitung auch Verbundfolien aus Ethylen-Vinylacetat-Copolymer (EVA) verwendet.

Die Verbundsicherheitsglasscheiben werden in einer geläufigen Herstellungsvariante nicht einzeln in dem gewünschten Format hergestellt, sondern aus großformatigen Verbundsicherheitsglastafeln herausgetrennt, insbesondere herausgeschnitten, indem die Verbundsicherheitsglastafel entlang mindestens einer Aufteilungslinie getrennt wird.

Das Heraustrennen von Verbundsicherheitsglasscheiben erfolgt durch separates Trennen der Glastafeln, häufig durch Ritzen entlang der Aufteilungslinie und anschließendes Brechen der Glastafeln. Die Verbundfolie wird zum Trennen beispielsweise erhitzt, um die Folie im weichen Zustand zu trennen, beispielsweise mit einem Messer zu schneiden. Bei anderen Verfahren ist vorgesehen, die Verbundfolie vorab mittels Laser vollständig zu verdampfen. Ein exemplarisches Verfahren wird in EP 2 550 129 B1 offenbart. Ein weiteres Verfahren ist aus US 2016/136846 A1 bekannt.

Die aus dem Stand der Technik bekannten Verfahren und Vorrichtungen weisen den Nachteil auf, dass insbesondere die Aufheizzeiten zum Aufheizen der Verbundfolie für ein plastisches Verformen und anschließendes Schneiden mit einem Messer sehr lang sind, wodurch der Trennvorgang insgesamt verzögert ist.

Der vorliegenden Erfindung liegt daher die Aufgabe zugrunde, ein Verfahren und eine Vorrichtung zum Trennen einer Verbundsicherheitsglastafel anzugeben, mit denen die Taktzeiten zum Trennen verkürzt werden.

Die vorgenannte Aufgabe ist bei einer gattungsgemäßen Vorrichtung gemäß dem Kennzeichnungsteil des Patentanspruchs 1 dadurch gelöst, dass mit der Lasereinrichtung eine Mehrzahl von nebeneinander angeordneten Einzelintensitätsprofilen zum Aufheizen der Verbundfolie zumindest entlang eines Abschnitts der Aufteilungslinie erzeugbar ist. Mit "Einzelintensitätsprofil" wird die Kontur der auf die Oberfläche der Verbundsicherheitsglastafel treffenden Laserstrahlen beschrieben, insbesondere in der senkrechten Draufsicht auf die Oberfläche. Eine Laserstrahlungsquelle erzeugt beispielweise eine Mehrzahl von Einzelintensitätsprofilen, beispielweise ein Einzelintensitätsprofil je Laserdiode, oder jede Laserstrahlungsquelle erzeugt ein einziges Einzelintensitätsprofil, beispielweise ein Einzelintensitätsprofil aus allen Laserdioden einer Laserstrahlungsquelle.

Ein Einzelintensitätsprofil ist, insbesondere in der Draufsicht, beispielsweise im Wesentlichen als Punkt, Oval, Ellipse oder Linie - Einzellaserlinie - ausgebildet. Die Einzellaserlinien sind vorzugsweise im Wesentlichen parallel zur Aufteilungslinie, in einem Winkel zur Aufteilungslinie oder orthogonal zur Aufteilungslinie angeordnet. Die Einzelintensitätsprofile, insbesondere die Einzellaserlinien, sind auf einer gedachten Achse nebeneinander angeordnet, wobei die gedachte Achse im Wesentlichen der Aufteilungslinie folgt. "Nebeneinander angeordnet" bedeutet, dass die Einzelintensitätsprofile in im Wesentlichen regelmäßigen Abständen aufeinander folgend, vorzugsweise entlang der Aufteilungslinie, angeordnet sind.

Eine Einzellaserlinie weist eine größere Erstreckung in einer Längsrichtung als in einer Breitenrichtung auf. Wenn die Einzelintensitätsprofile als Einzellaserlinien ausgebildet sind, sind diese vorzugsweise in ihrer Längsrichtung aufeinanderfolgend angeordnet. Bei "Länge" oder "Breite" eines Einzelintensitätsprofils ist stets die Länge oder Breite des Einzelintensitätsprofils auf der Oberfläche bzw. beim Durchtritt durch die Oberfläche der Verbundsicherheitsglastafel gemeint. Vorzugsweise ist die Länge und/oder Breite bzw. der Durchmesser auf einen Leistungseinschluss von etwa 86,5% der Leistung bezogen. Insbesondere wenn eine "Überlappung" vorgesehen ist, überlappen sich vorzugsweise die Bereiche mit dem Leistungseinschluss von 86,5% der Leistung zumindest teilweise.

Es ist auch vorgesehen, dass die Einzellaserlinien in ihrer Breitenrichtung aufeinander folgend angeordnet sind. Bei dieser Variante ist es bevorzugt, dass die Länge etwa dem 2-fachen bis 3-fachen der Breite entspricht, insbesondere bei einer bevorzugten Breite von etwa 1 mm. Der Durchmesser eines punktförmigen Einzelintensitätsprofils beträgt beispielsweise zwischen 1 mm und 4 mm, vorzugsweise 3 mm. Bei ovalen oder ellipsenförmigen Einzelintensitätsprofilen entspricht die Breite der Breite an der breitesten Stelle. Beispielweise sind die Einzelintensitätsprofile, insbesondere die Einzellaserlinien, zueinander beabstandet angeordnet.

Vorzugsweise ist vorgesehen, dass die Länge einer Einzellaserlinie etwa dem 3-fachen bis 20-fachen der Breite einer Einzellaserlinie entspricht. Das ist insbesondere bei paralleler Anordnung zur Aufteilungslinie vorgesehen. Die Breite einer Einzellaserlinie entspricht vorzugsweise etwa 3 mm. Insbesondere beträgt die Länge einer Einzellaserlinie zwischen 6 mm und 60 mm, insbesondere etwa 30 mm.

Gemäß einer ersten vorteilhaften Ausgestaltung ist vorgesehen, dass die Mehrzahl von nebeneinander angeordneten Einzelintensitätsprofilen, insbesondere Einzellaserlinien, eine, vorzugsweise durchgehende, Laserlinie bildet. Die Laserlinie setzt sich aus der Mehrzahl von Einzelintensitätsprofilen, insbesondere der Mehrzahl von Einzellaserlinien, entlang zumindest eines Abschnitts der Aufteilungslinie zusammen. Die Laserlinie kann in ihrer Länge über die Anzahl an Laserstrahlungsquellen bzw. Einzelintensitätsprofilen - Einzellaserlinien - beliebig angepasst werden.

Insbesondere zur Homogenisierung der Strahlungsintensität im Verlauf der Laserlinie hat es sich als vorteilhaft herausgestellt, wenn vorgesehen ist, dass die Einzelintensitätsprofile, insbesondere die Einzellaserlinien, in ihren Randbereichen zumindest teilweise überlappend angeordnet sind. Aufgrund der Intensitätsverteilung der Strahlung einer Laserstrahlungsquelle ist die Strahlungsintensität in den Randbereichen der Einzelintensitätsprofile, insbesondere der Einzellaserlinien, reduziert. Um gleichwohl einen homogeneren Energieeintrag in die Verbundfolie zu gewährleisten, sind die Einzelintensitätsprofile, insbesondere die Einzellaserlinien, zumindest teilweise überlappend angeordnet. Eine Überlappung erfolgt bei Einzellaserlinien in Längsrichtung in den angrenzenden Randbereichen von jeweils zwei Einzellaserlinien. Alternativ dazu ist auch vorgesehen, dass die Einzelintensitätsprofile, insbesondere die Einzellaserlinien, unmittelbar aneinander angrenzen.

Die Lasereinrichtung ist derart gehalten, dass die Mehrzahl von Einzelintensitätsprofilen, insbesondere die Mehrzahl von Einzellaserlinien oder die Laserlinie, entlang zumindest eines Abschnitts der Aufteilungslinie, vorzugsweise mindestens entlang der gesamten Erstreckung der Aufteilungslinie, erzeugbar ist. Beispielsweise ist zumindest die Lasereinrichtung derart bewegbar gehalten, dass die Laserstrahlungsquellen so positionierbar sind, dass sich die Mehrzahl von Einzelintensitätsprofilen, insbesondere die Mehrzahl von Einzellaserlinien oder die Laserlinie, entlang der Aufteilungslinie, also im Wesentlichen koaxial mit der Aufteilungslinie, erstreckt.

Vorteilhaft ist die Lasereinrichtung justierbar gehalten, so dass die Mehrzahl von Einzelintensitätsprofilen, insbesondere die Mehrzahl von Einzellaserlinien oder die Laserlinie, einer Bewegung der Verbundsicherheitsglastafel, vorzugsweise orthogonal zur Aufteilungslinie, nachgeführt werden kann.

Ferner ist vorgesehen, dass die Mehrzahl von Einzelintensitätsprofilen, insbesondere die Mehrzahl von Einzellaserlinien oder die Laserlinie, vorzugsweise leicht versetzt zur Aufteilungslinie angeordnet ist, insbesondere zwischen 0,1 mm und 0,7 mm, bevorzugt 0,5 mm, versetzt zur Aufteilungslinie angeordnet ist. Durch die versetzte Anordnung kann sichergestellt werden, dass während des Auseinanderziehens der Glastafeln die Mehrzahl von Einzelintensitätsprofile, insbesondere die Mehrzahl von Einzellaserlinien oder die Laserlinie, zumindest an einer Glastafelkante verbleibt. Üblicherweise wird beim Auseinanderziehen ein Teil der Verbundsicherheitsglastafel festgehalten und der andere Teil davon weg bewegt. Der Versatz besteht in Richtung des weg bewegten Abschnitts der Verbundsicherheitsglastafel. So wird gewährleistet, dass eine maximale Laserleistung in den entstehenden Spalt zwischen den Abschnitten der Verbundsicherheitsglastafel trifft.

Besonders bevorzugt ist vorgesehen, dass die Position der Mehrzahl von Einzelintensitätsprofilen, insbesondere der Mehrzahl von Einzellaserlinien oder der Laserlinie, orthogonal zur Aufteilungslinie justierbar ist, so dass die Mehrzahl von Einzelintensitätsprofilen Laserlinie optimal in Position gehalten werden kann, insbesondere an mindestens einer Glastafelkante, wenn sich die Glastafelkante bewegt.

Eine weitere Ausgestaltung der Vorrichtung sieht vor, dass die Lasereinrichtung mindestens eine Strahlformanordnung zur Bildung der Laserlinien aufweist. Unter "Laserstrahlungsquellen" werden im Sinne der vorliegenden Erfindung Laserstrahlungsquellen verstanden, die keine Strahlformanordnung aufweisen, an denen aber eine Strahlformanordnung anordenbar ist. Die Strahlformanordnung ist entweder den einzelnen Laserstrahlungsquellen selbst zugeordnet oder eine einzelne Strahlformanordnung formt die Laserstrahlung einer Mehrzahl von Laserstrahlungsquellen.

Die von den Laserstrahlungsquellen emittierte Laserstrahlung bildet die Mehrzahl von Einzelintensitätsprofilen, insbesondere die Mehrzahl von Einzellaserlinien oder die Laserlinie, zum Aufheizen der Verbundfolie. Beispielsweise die Strahlformanordnung konfektioniert die emittierte Laserstrahlung und formt die Mehrzahl von Einzelintensitätsprofilen, insbesondere die Mehrzahl von Einzellaserlinien oder die Laserlinie. Die Strahlformanordnung weist beispielsweise eine mindestens in einer Achse, insbesondere in zwei Achsen, formende Kollimatoroptik auf.

Die Laserstrahlung wird in mindestens einer Achse geformt, also zumindest in einer Achse im Wesentlichen parallel, zur Bildung der Mehrzahl von Einzelintensitätsprofilen, insbesondere zur Bildung der Mehrzahl von Einzellaserlinien oder der Laserlinie, ausgerichtet. Eine sehr geringe Divergenz bis etwa 6° wird auch noch als im Wesentlichen parallel angesehen, da der Abstand der Lasereinrichtung, insbesondere der Strahlformanordnung, einen Abstand zur Oberfläche der Verbundglastafel von etwa 100 mm bis 150 mm nicht überschreitet. Vorzugsweise ist eine maximale Divergenz von bis zu 6° bei Abständen der Strahlformanordnung zur Oberfläche der Verbundsicherheitsglastafel zwischen 30 mm und 50 mm vorgesehen und eine maximale Divergenz von bis zu 2° bei einem Abstand der Strahlformanordnung zwischen 100 mm und 150 mm.

Unter "Einzellaserlinie" oder der "Laserlinie" im Sinne dieser Patentanmeldung wird ein linienförmiges, insbesondere im Wesentliches homogenes, Strahlungsprofil verstanden, das sich bei Projektion auf eine Oberfläche, beispielsweise die Oberfläche der Verbundsicherheitsglastafel, als Linie darstellt. Als Linie wird dabei jedes Strahlprofil verstanden, dessen Erstreckung in einer Längsrichtung wesentlich größer als in einer Breitenrichtung ist. Die Lasereinrichtung emittiert durch die Mehrzahl von Einzellaserlinien eine Laserstrahlungszeile, die sich zumindest entlang eines Abschnitts der Aufteilungslinie erstreckt und insbesondere die Laserlinie bildet. Eine Einzellaserlinie wird beispielsweise dadurch gebildet, dass die von einer Laserstrahlungsquelle emittierte Laserstrahlung in Form eines Fächerwinkels zu einer Linie geformt wird. Die Mehrzahl von Einzellaserlinien, insbesondere die Laserlinie, erstreckt sich vorzugsweise entlang einer gedachten Achse, die mit der Aufteilungslinie zusammenfällt oder-wie beschrieben - geringfügig versetzt dazu ist.

Die Mehrzahl von Einzelintensitätsprofilen, insbesondere die Mehrzahl von Einzellaserlinien oder die Laserlinie, hat beispielsweise im Wesentlichen eine Breite zwischen 1 mm und 5 mm, vorzugsweise eine Breite von etwa 3 mm, die Breite wird dabei beispielsweise am Eintritt in die Oberfläche der Verbundsicherheitsglastafel gemessen. Der Abstand der Lasereinrichtung zur Oberfläche der Verbundsicherheitsglastafel, insbesondere der Abstand der Strahlformanordnung, insbesondere einer Linsenanordnung bzw. einer Linse, zur Oberfläche der Verbundsicherheitsglastafel beträgt im Betrieb beispielsweise zwischen 25 mm und 150 mm, insbesondere etwa 70 mm.

Die Laserstrahlungsquellen sind vorzugsweise entlang einer gedachten Achse nebeneinander angeordnet. Der Abstand zwischen den Mittellinien von zwei Laserstrahlungsquellen beträgt vorzugsweise zwischen 20 mm und 100 mm, insbesondere zwischen 30 mm und 40 mm, vorzugsweise etwa 50 mm. Beispielsweise sind die einzelnen Laserstrahlungsquellen, insbesondere auch die Strahlformanordnung, ortsfest angeordnet. Vorteilhaft sind mindestens fünf Laserstrahlungsquellen nebeneinander angeordnet, bevorzugt zwischen 5 und 150 Laserstrahlungsquellen. Folglich bilden sich 5 oder zwischen 5 und 150 Einzelintensitätsprofile, insbesondere Einzellaserlinien.

Die aus der Mehrzahl von Laserstrahlungsquellen, insbesondere die von der Strahlformanordnung konfektionierte, Mehrzahl von Einzelintensitätsprofilen, insbesondere Mehrzahl von Einzellaserlinien oder die Laserlinie, dient dem Aufheizen der Verbundfolie auf eine Temperatur, bei der die Verbundfolie thermoplastisch verformbar ist, insbesondere so, dass die Glastafeln der Verbundsicherheitsglastafel entlang der Aufteilungslinie zumindest voneinander separiert werden können. Das Aufheizen der Verbundfolie erfolgt auf eine Temperatur, bei der die Verbundfolie thermoplastisch erhitzt und weich wird, vorzugsweise aber keine irreversible Schädigung der Verbundfolie erfolgt.

Das Aufheizen ist in Bezug auf die Verbundfolie vorteilhaft reversibel. Insbesondere erfolgt das Aufheizen derart, dass keine flüchtigen Stoffe, beispielsweise Weichmacher, aus der Verbundfolie verdampfen. Das Separieren erfolgt vorteilhaft so, dass die Verbundfolie nach dem Auseinanderziehen der beiden Verbundsicherheitsglastafelhälften bei thermoplastischer Verformung der Folie zwischen den Verbundsicherheitsglastafelhälften mit einem Messer entlang der Aufteilungslinie zwischen den Glastafeln getrennt werden kann.

Die Vorrichtung eignet sich insbesondere für gerade Trennschnitte und hat gegenüber dem Stand der Technik den Vorteil, dass im Vergleich zu aus dem Stand der Technik bekannten Heizmitteln, beispielsweise Infrarotstrahlern mit Reflektoren, die Aufheizung gezielt entlang einer schmalen Spur erfolgen kann, so dass keine oder nur eine sehr geringe Beeinflussung der Verbundfolie außerhalb des Trennbereiches erfolgt. Insbesondere erfolgt keine ungewollte Delamination der Verbundfolie von den Glastafeln in den Randbereichen. Folglich werden keine Kanäle zum Eindringen von Flüssigkeit und Gasen aus der Umwelt erzeugt und es werden in den Randbereichen keine Spannungen in den Glastafeln erzeugt. Die Vorrichtung eignet sich daher insbesondere zum Trennen von sehr dünnen Verbundsicherheitsglastafeln, beispielsweise aus dem Automobilbereich oder für Unterhaltungselektronik, insbesondere für Flachbildschirme.

Zudem kann mit der Vorrichtung das Aufheizen entlang der Aufteilungslinie deutlich schneller erfolgen, als es mit aus dem Stand der Technik bekannten Heizmitteln möglich ist, so dass die Taktzeiten für einen vollständigen Trennvorgang entlang einer Aufteilungslinie um mindestens 30% und bis zu 70% reduziert werden können.

Ein weiterer Vorteil besteht darin, dass bestehende Anlagen mit einer Lasereinrichtung nachgerüstet werden können, beispielweise im Austausch gegen bestehende Infrarotstrahler, so dass die Effektivität einer Anlage gesteigert werden kann.

Die Form der Mehrzahl von Einzelintensitätsprofilen, insbesondere der Mehrzahl von Einzellaserlinien oder der Laserlinie, wird vorzugsweise weiter dadurch ausgebildet, dass die Strahlformanordnung eine Linsenanordnung aufweist. Alternativ oder zusätzlich dazu ist vorgesehen, dass die Strahlformanordnung andere optische Mittel zur Strahlformung, insbesondere beispielsweise mindestens einen halbdurchlässigen Spiegel, aufweist.

Beispielsweise ist vorgesehen, dass die Strahlformanordnung mindestens eine Linse, insbesondere eine Zylinderlinse, bevorzugt eine asphärische Zylinderlinse, für mindestens eine Mehrzahl an Laserstrahlungsquellen aufweist. Eine Linse ist beispielsweise einer Gruppe von zwei bis fünf Laserstrahlungsquellen zugeordnet.

Alternativ dazu ist auch vorgesehen, dass für jede einzelne Laserstrahlungsquelle mindestens eine Linse, insbesondere eine Zylinderlinse, bevorzugt eine asphärische Zylinderlinse, vorhanden ist. Die Länge der Linse beträgt beispielsweise zwischen 10 mm und 15 mm. Mindestens eine Linse ist beispielsweise unmittelbar an einer Laserstrahlungsquelle angeordnet, insbesondere mit dieser verklebt oder verlötet.

Je nach Ausgestaltung und Form der Linse ist diese so befestigt, dass mittels der Linse bzw. der Linsen die Einzelintensitätsprofile, insbesondere Einzellaserlinien bzw. die Laserlinie, gebildet werden bzw. wird. Die Linse oder die Linsen bündeln die Strahlung einer Laserstrahlungsquelle bzw. mehrerer Laserstrahlungsquellen vorzugsweise auf eine Achse, um die Mehrzahl von Einzelintensitätsprofilen, insbesondere die Mehrzahl von Einzellaserlinien oder die Laserlinie, auszubilden. Die zweite Achse bleibt vollständig divergent, also so, wie die Laserstrahlung aus der Laserstrahlungsquelle austritt, beispielsweise in einem Winkel zwischen 10° und 20°, oder wird ebenfalls geformt.

Um insbesondere den Einfluss von Abstandsschwankungen zwischen der Lasereinrichtung und der Verbundsicherheitsglastafel zu reduzieren, sieht eine weitere Ausgestaltung der Vorrichtung vor, dass die Strahlformanordnung die Mehrzahl von Einzelintensitätsprofilen, insbesondere die Mehrzahl von Einzellaserlinien oder die Laserlinie, aus zumindest in einer Achsrichtung im Wesentlichen paralleler Strahlung bildet. Die Linsenanordnung wirkt vorzugsweise als Kollimator und richtet die emittierte Strahlung zu einem Laserstrahl mit im Wesentlichen konstanter Spurbreite entlang einer Achse, der auf der Verbundsicherheitsglastafel eine Mehrzahl von Einzelintensitätsprofilen, vorzugsweise eine Mehrzahl von Einzellaserlinien oder die Laserlinie, erzeugt, aus. Die Mehrzahl von Einzelintensitätsprofilen, insbesondere die Mehrzahl von Einzellaserlinien oder die Laserlinie, durchtritt das Verbundsicherheitsglas folglich mit einer im Wesentlichen konstanten Breite.

Eine konstante Breite der Laserlinie wird insbesondere bei Überlappung der Einzelintensitätsprofile, insbesondere der Einzellaserlinien, gewährleistet. Eine geringfügige Variation der Breite kann durch die nachfolgend beschriebene, im Wesentlichen linienförmige, Ellipsenform der Einzelintensitätsprofile, insbesondere der Einzellaserlinien, auftreten. Ein leicht divergenter Strahl ausgehend von der Strahlformanordnung wird auch als im Wesentlichen parallel angesehen, beispielweise eine Aufweitung von etwa 1,5 mm Breite der Laserlinie auf einer Strecke von etwa 70 mm, also dem Abstand der Strahlformanordnung von der Oberfläche der Verbundsicherheitsglastafel.

Die Mehrzahl von Einzelintensitätsprofilen, insbesondere die Mehrzahl von Einzellaserlinien oder die Laserlinie, ist folglich nicht auf die Verbundfolie fokussiert, sondern hat eine im Wesentlichen konstante Breite, die durch im Wesentlichen parallele Laserstrahlung realisiert wird. Insbesondere wird die Mehrzahl von Einzelintensitätsprofilen, insbesondere die Mehrzahl von Einzellaserlinien oder die Laserlinie, aus zumindest in einer Achsrichtung vollständig paralleler Strahlung gebildet.

Dieses Ausführungsbeispiel hat den Vorteil, dass die Laserstrahlung nach dem Durchtritt durch die Verbundfolie teilweise zurückreflektiert wird und wiederum zumindest teilweise in der Verbundfolie absorbiert wird. Dieser Vorteil wird insbesondere bei vorhandenen Glasbeschichtungen verstärkt. Bevorzugt ist vorgesehen, dass die Vorrichtung einen Spiegel aufweist, und dass der Spiegel auf der von den Laserstrahlungsquellen abgewandten Seite der Verbundsicherheitsglastafel angeordnet ist. Der Spiegel reflektiert die transmittierte Strahlung, so dass diese erneut die Verbundsicherheitsglastafel durchtritt und zumindest teilweise in der Verbundfolie entlang der Aufteilungslinie absorbiert werden kann.

Eine weitere Ausgestaltung der Vorrichtung sieht vor, dass die Länge der Summe der Mehrzahl von Einzelintensitätsprofilen, insbesondere die Länge der Summe der Mehrzahl von Einzellaserlinien oder die Länge der Laserlinie, mindestens dem 30-fachen des Durchmessers eines Einzelintensitätsprofils oder der Breite eines Einzelintensitätsprofils bzw. der Breite einer Einzellaserlinie, insbesondere der Breite der Laserlinie, entspricht. Die Länge der Summe der Mehrzahl von Einzelintensitätsprofilen, insbesondere Einzellaserlinien, entspricht der Summe der Länge bzw. der Durchmesser der Einzelintensitätsprofile, insbesondere Einzellaserlinien, wenn diese unmittelbar aneinander angrenzen; entspricht der Summe der Durchmesser bzw. der Länge der Einzelintensitätsprofile, insbesondere der Einzellaserlinien, zuzüglich der Abstände zwischen den Einzelintensitätsprofilen, wenn diese zueinander beabstandet sind; entspricht der Länge vom Beginn des ersten Einzelintensitätsprofils, insbesondere der ersten Einzellaserlinie, bis zum Ende des letzten Einzelintensitätsprofils, insbesondere der letzten Einzellaserlinie, wenn sich die Einzelintensitätsprofile, insbesondere die Einzellaserlinien, überlappen. Das entspricht auch der Länge der Laserlinie.

Wenn folglich die Breite oder der Durchmesser eines Einzelintensitätsprofils, insbesondere die Breite einer Einzellaserlinie, etwa 3 mm beträgt, beträgt die Länge der Summe der Mehrzahl von Einzelintensitätsprofilen, insbesondere der Mehrzahl von Einzellaserlinien oder der Laserlinie, bei einem Faktor von 33 mindestens etwa 100 mm. Vorteilhaft ist auch vorgesehen, dass die Länge der Summe der Mehrzahl von Einzelintensitätsprofile" insbesondere die Länge der Summe der Mehrzahl von Einzellaserlinien oder der Laserlinie, zwischen dem 30-fachen und dem 1700-fachen, bevorzugt zwischen dem 30-fachen und dem 333-fachen, insbesondere dem 100-fachen, der Breite oder des Durchmessers eines Einzelintensitätsprofils, insbesondere der Breite einer Einzellaserlinie bzw. der Laserlinie, entspricht. Bei einer Breite bzw. einem Durchmesser von etwa 3 mm folglich etwa zwischen 90 mm und 5100 mm bzw. etwa 300 mm.

Ferner ist vorgesehen, dass die Lasereinrichtung derart ausgebildet und angeordnet ist, dass die Länge der Summe der Mehrzahl von Einzelintensitätsprofilen, insbesondere die Länge der Summe der Mehrzahl von Einzellaserlinien oder die Länge der Laserlinie, mindestens der Länge der gesamten Erstreckung der Aufteilungslinie entspricht. Vorzugsweise entspricht die Länge beispielsweise dem 1,5-fachen der Länge der Aufteilungslinie. Bei üblichen Glasbreiten erstreckt sich die Länge der Aufteilungslinien üblicherweise zwischen 100 mm und 5000 mm, insbesondere 3200 mm oder 4700 mm.

Eine weitere Ausgestaltung der Vorrichtung sieht vor, dass die Einzelintensitätsprofile, insbesondere die Einzellaserlinien oder die Laserlinie, vollständig gerade sind oder alternativ, dass mindestens ein Einzelintensitätsprofil, insbesondere eine Einzellaserlinie oder die Laserlinie, zumindest abschnittsweise eine Krümmung aufweist. Beispielsweise ist die Strahlformanordnung zumindest teilweise so ausgebildet und eingerichtet, dass ein gekrümmtes Einzelintensitätsprofil, insbesondere eine gekrümmte Einzellaserlinie, oder ein Einzelintensitätsprofil, insbesondere eine Einzellaserlinie, mit einem Radius realisierbar ist. Auf diese Weise können auch Aufteilungslinien mit einer Krümmung oder mit einem Radius erfindungsgemäß aufgeheizt werden. Insbesondere weisen die in den Randbereichen angeordneten Einzelintensitätsprofile, insbesondere Einzellaserlinien, eine Krümmung auf. Das weist den Vorteil auf, dass beispielweise im Randbereich der Aufteilungslinie Radien realisiert werden können. Beispielsweise ist auch vorgesehen, dass eine Mehrzahl von Einzelintensitätsprofilen auf einer gekrümmten Bahn nebeneinander angeordnet sind.

Als vorteilhafte Laserstrahlungsquellen haben sich gemäß einer weiteren Ausgestaltung der Vorrichtung Laserdioden herausgestellt. Es ist vorgesehen, dass jede Laserstrahlungsquelle mindestens eine Laserdiode aufweist. Eine Laserdiode mit einem Kollimator, hier der Strahlformanordnung, insbesondere Linsenanordnung bzw. Linse, bildet einen Diodenlaser. Vorzugsweise weist jede Laserstrahlungsquelle eine Anordnung einer Mehrzahl von Laserdioden auf bzw. ein Laserdioden-Stack auf. Insbesondere bildet jede Laserstrahlquelle mit einer Strahlformanordnung einen Diodenlaser.

Eine Laserdiode, insbesondere barrenförmige Laserdiode, emittiert üblicherweise ein ellipsenförmiges Strahlungsprofil. Dieses Strahlungsprofil wird von der Strahlformanordnung, insbesondere der der Laserdiode zugeordneten Linse, auf die Form einer sehr länglichen Ellipse gebracht, die im Wesentlichen die Form einer Linie aufweist. Auf diese Weise wird vorzugsweise die Laserlinie bzw. werden die Einzelintensitätsprofile, insbesondere die Einzellaserlinien, gebildet. Eine Einzellaserlinie weist beispielsweise im Profil die Kontur einer sehr langgestreckten - linienförmigen - Ellipse auf.

Gemäß einer Ausgestaltung beträgt die Leistung einer Laserstrahlungsquelle zwischen 5 Watt und 50 Watt, wobei die Wellenlänge der emittierten Laserstrahlung zwischen 1200 nm und 2200 nm beträgt. In diesem Bereich weist die Verbundfolie Absorptionseigenschaften auf, die eine vorteilhafte Plastifizierung der Folie durch die Mehrzahl von Einzelintensitätsprofilen, insbesondere die Mehrzahl von Einzellaserlinien oder die Laserlinie, gewährleisten. Vorzugsweise liegt die Wellenlänge zwischen 1300 nm und 2100 nm.

Beispielsweise um die Strahlungsintensität entlang der Aufteilungslinie zu homogenisieren, ist gemäß einer weiteren Ausgestaltung der Vorrichtung vorgesehen, dass die Lasereinrichtung, insbesondere die Laserstrahlungsquellen und/oder die Strahlformanordnung, insbesondere parallel zur Erstreckung der Aufteilungslinie, oszillierbar und/oder verfahrbar gehalten ist. Vorzugsweise ist die Lasereinrichtung in Längsrichtung der Mehrzahl von Einzelintensitätsprofilen, insbesondere der Mehrzahl von Einzellaserlinien oder der Laserlinie, oszillierbar und/oder verfahrbar gehalten. Durch die Oszillation wird ein vorteilhafter Wärmeeintrag in die Bereiche zwischen zwei Einzelintensitätsprofilen, insbesondere Einzellaserlinien gewährleistet, sofern die Einzelintensitätsprofile, insbesondere Einzellaserlinien, zueinander beabstandet sind.

Die Amplitude ist in einem Bereich von wenigen Millimetern bis einigen Zentimetern vorgesehen. Ferner ist auch vorgesehen, dass die Amplitude dem halben Abstand zwischen zwei Mittellinien von zwei Laserstrahlungsquellen entspricht, beispielsweise eine Amplitude von etwa 25 mm. Ferner ist vorgesehen, dass die Amplitude einem Vielfachen des halben Abstands zwischen zwei Mittellinien von zwei Laserstrahlungsquellen entspricht. Beispielsweise entspricht die Amplitude dem halben Abstand, dem vollen oder dem 1,5-fachen Abstand zwischen zwei Einzelintensitätsprofilen, insbesondere Einzellaserlinien.

Durch die Oszillation überdeckt sich die von der Laserstrahlung eingebrachte Wärmeleistung der einzelnen Laserstrahlungsquellen entlang der Aufteilungslinie - der Einzelintensitätsprofile bzw. der Einzellaserlinien -, wodurch der Wärmeeintrag in die Verbundfolie über mehrere Oszillationen bzw. Überfahrten hinweg homogenisiert wird.

Zudem ist vorgesehen, dass die Amplitude weniger als dem halben Abstand, insbesondere einem Bruchteil des halben Abstands, zwischen zwei Mittellinien von zwei Laserstrahlungsquellen entspricht. Vorzugsweise ist der Oszillationsweg geringer als der Abstand zwischen zwei Mittellinien von zwei Laserstrahlungsquellen. Insbesondere beträgt der Oszillationsweg zwischen 70% und 98% des Abstandes zwischen zwei Mittellinien von zwei Laserstrahlungsquellen bzw. beträgt die Amplitude zwischen 35% und 49% des Abstandes zwischen zwei Mittellinien von zwei Laserstrahlungsquellen.

Es ist auch vorgesehen, dass eine Lasereinrichtung mit einer Mehrzahl an Laserstrahlungsquellen entlang der Aufteilungslinie oszilliert und/oder verfahren wird. Beispielsweise sind etwa fünf Laserstrahlungsquellen nebeneinander auf einer gedachten Achse angeordnet. Die Lasereinrichtung ist entlang der Aufteilungslinie oszillierbar bzw. verfahrbar gehalten, so dass die Verbundfolie entlang der gesamten Erstreckung der Aufteilungslinie aufheizbar ist. Zumindest ein Teil der Lasereinrichtung wird beispielsweise mindestens einmal, vorzugsweise mehrfach, entlang der gesamten Erstreckung der Aufteilungslinie verfahren, um die Verbundfolie aufzuheizen.

Dieses Ausführungsbeispiel weist unter anderem den Vorteil auf, dass durch die Oszillation und/oder das Verfahren Inhomogenitäten, die durch eine einzelne Laserdiode hervorgerufen werden, ausgeglichen werden. Üblicherweise sind das Inhomogenitäten, die durch einzelne Laserdioden, insbesondere durch voneinander abweichende Einzelintensitätsprofile, hervorgerufen werden. Auch der Ausfall einzelner Laserdioden oder Qualitätsunterschiede werden kompensiert. Die Laserdioden müssen daher nicht zwangsläufig selektiert werden.

Gemäß einer alternativen Ausgestaltung ist auch vorgesehen, dass die Laserstrahlungsquellen Punktlaserquellen sind bzw. mit einer Strahlformanordnung zu einem Punkt gebündelt werden und mit einer hohen Frequenz, beispielsweise mit einer Amplitude von etwa 2 mm bis 10 mm, oszillieren, um ein Einzelintensitätsprofil, insbesondere eine Einzellaserlinie, zu erzeugen. Jede Laserstrahlungsquelle ist dazu separat oszillierbar angeordnet, so dass insgesamt eine Mehrzahl von Einzelintensitätsprofilen, insbesondere eine Laserlinie, entlang der Aufteilungslinie durch hochfrequentes Oszillieren der Laserstrahlungsquellen realisiert wird. Die Strahlformanordnung ist dabei ortsfest oder ebenfalls oszillierbar angeordnet.

Insbesondere um die Länge der Summe der Mehrzahl von Einzelintensitätsprofilen, insbesondere die Länge der Summe der Mehrzahl von Einzelintensitätsprofilen oder die Länge der Laserlinie, an die Breite oder Länge einer zu trennenden Verbundsicherheitsglastafel anzupassen, ist gemäß einer weiteren Ausgestaltung vorgesehen, dass die Laserstrahlungsquellen einzeln steuerbar sind. Um die Länge der Summe der Mehrzahl von Einzelintensitätsprofilen, insbesondere die Länge der Summe der Mehrzahl von Einzellaserlinien oder die Länge der Laserlinie, entlang der Aufteilungslinie zu verlängern oder zu verkürzen, werden einzelne Laserstrahlungsquellen eingeschaltet oder abgeschaltet.

Ferner ist auch vorgesehen, dass die Laserstrahlungsquellen rotierbar, insbesondere um bis zu 90° rotierbar, gehalten sind, um eine Ausrichtung entlang der Aufteilungslinie zu realisieren. Das ist insbesondere bei kurzen Einzellaserlinien, beispielsweise mit einer Breite von etwa 1 mm und einer Länge von etwa 3 mm vorteilhaft.

Ferner ist auch vorgesehen, dass die Laserstrahlungsquellen gruppenweise steuerbar sind, um die Länge der Summe der Mehrzahl von Einzelintensitätsprofilen, insbesondere die Länge der Summe der Mehrzahl von Einzellaserlinien oder die Länge der Laserlinie, einzustellen. Beispielsweise lässt sich die Mehrzahl von Einzelintensitätsprofilen, insbesondere die Laserlinie, in Meterschritten einschalten und ausschalten.

Die Vorrichtung ist insbesondere zur Durchführung des nachfolgend beschriebenen Verfahrens ausgestaltet und eingerichtet.

Die genannte Aufgabe ist ferner gelöst durch ein Verfahren zum Trennen einer Verbundsicherheitsglastafel, das die folgenden Verfahrensschritte umfasst:
- Trennen, insbesondere mechanisches Ritzen und Brechen, der beiden Glastafeln entlang mindestens einer vorgebbaren Aufteilungslinie,
- Aufheizen der Verbundfolie entlang der Aufteilungslinie,
- Auseinanderziehen der Glastafeln entlang der Aufteilungslinie,
- Trennen der Verbundfolie.

Es ist vorgesehen, dass die einzelnen Verfahrensschritte zumindest teilweise gleichzeitig ausgeführt werden. Das Aufheizen der Verbundfolie erfolgt erfindungsgemäß mit einer Mehrzahl von nebeneinander angeordneten Mehrzahl von Einzelintensitätsprofilen, insbesondere einer Mehrzahl von Einzellaserlinien oder einer Laserlinie, entlang zumindest eines Abschnitts der Aufteilungslinie mit einer Lasereinrichtung mit einer Mehrzahl nebeneinander angeordneter Laserstrahlungsquellen. Das Verfahren wird vorzugsweise mit einer vorstehend beschriebenen Vorrichtung durchgeführt. Vorzugsweise weist die Lasereinrichtung mindestens eine Strahlformanordnung auf.

Die beiden Glastafeln werden vorteilhaft dadurch getrennt, dass sie zunächst geritzt, insbesondere mechanisch geritzt und anschließend gebrochen werden. Das Ritzen und Brechen erfolgt entlang der mindestens einen Aufteilungslinie. Die Verbundfolie wird durch das Trennen der Glastafeln zunächst nicht beeinflusst. Vorteilhaft anschließend oder bereits während des Trennens, insbesondere Brechens, erfolgt das Aufheizen der Verbundfolie. Beispielsweise kann das Aufheizen auch bereits gleichzeitig mit dem Brechen einer oder beider Glastafeln erfolgen bzw. während des Brechvorgangs beginnen. Das Aufheizen der Verbundfolie erfolgt auf eine Temperatur, bei der die Verbundfolie weich wird, aber insbesondere keine irreversible Schädigung der Verbundfolie erfolgt. Das Aufheizen ist in Bezug auf die Verbundfolie vorteilhaft reversibel.

Ist die Verbundfolie auf eine ausreichende Temperatur, beispielsweise zwischen 150°C und 230°C, insbesondere etwa 170°C, 180°C oder 190°C, aufgeheizt, können die Glastafeln entlang der Aufteilungslinie, insbesondere orthogonal zur Aufteilungslinie, auseinandergezogen werden. Beispielsweise so, dass ein Schneidwerkzeug zwischen die Glastafeln eingebracht werden kann, um die Verbundfolie zu trennen. Vorzugsweise handelt es sich dabei um ein Schneidmesser oder eine Klinge.

Erfindungsgemäß ist vorgesehen, dass zum Aufheizen der Verbundfolie eine Mehrzahl von Einzelintensitätsprofilen, insbesondere eine Mehrzahl von Einzellaserlinien oder eine Laserlinie, entlang der Aufteilungslinie mit einer Lasereinrichtung mit einer Mehrzahl nebeneinander angeordneter Laserstrahlungsquellen und vorzugsweise mindestens einer Strahlformanordnung, insbesondere eine Kollimatoroptik aufweisend, erzeugt wird. Die Mehrzahl von Einzelintensitätsprofilen, insbesondere die Mehrzahl von Einzellaserlinien oder die Laserlinie, wird - wie vorstehend beschrieben - entlang zumindest eines Abschnitts der Aufteilungslinie projiziert bzw. zusätzlich entlang der Aufteilungslinie bewegt, wenn die Länge der Summe der Mehrzahl von Einzelintensitätsprofilen, insbesondere die Länge der Summe der Mehrzahl von Einzellaserlinien oder die Länge der Laserlinie, nicht der vollständigen Erstreckung der Aufteilungslinie entspricht, so dass die Verbundfolie entlang der Aufteilungslinie durch die Laserstrahlung der Laserstrahlungsquellen aufgeheizt wird.

Vorzugsweise bildet die Mehrzahl von Einzelintensitätsprofilen, insbesondere die Mehrzahl von Einzellaserlinien, dadurch, dass die Einzelintensitätsprofile unmittelbar aneinander angrenzend angeordnet sind oder die Einzelintensitätsprofile sich in Längsrichtung der Aufteilungslinie teilweise überlappen, gemeinsam eine Laserlinie. Die Laserlinie wird vorteilhaft zum Aufheizen der Verbundfolie verwendet.

Gemäß einer Ausgestaltung des Verfahrens ist vorgesehen, dass das Aufheizen der Verbundfolie vor dem Auseinanderziehen der Glastafeln erfolgt. Ferner ist gemäß einer Ausgestaltung vorgesehen, dass ein Trennen der Verbundfolie durch das Auseinanderziehen nach dem Aufheizen erfolgt. Die Folie wird vorteilhaft durch das Aufheizen derart weich, dass sie durch das Auseinanderziehen getrennt wird.

Das Aufheizen der Verbundfolie entlang der Aufteilungslinie erfolgt mit der Laserstrahlung der Mehrzahl von Laserstrahlungsquellen, wobei vorteilhaft die Strahlformanordnung die Mehrzahl von Einzelintensitätsprofilen, insbesondere die Mehrzahl von Einzellaserlinien oder die Laserlinie, aus im Wesentlichen parallelen Strahlen in der Ebene bildet, die senkrecht zur Aufteilungslinie verläuft. Der Strahlengang der Einzelintensitätsprofile, insbesondere der Einzellaserlinie oder der Laserlinie, erfolgt somit im Wesentlichen parallel durch das Verbundsicherheitsglas im Rahmen der Breite und der Länge der Summe der Mehrzahl von Einzelintensitätsprofilen, insbesondere der Länge der Summe der Mehrzahl von Einzellaserlinien oder der Länge der Laserlinie.

Eine Ausgestaltung des Verfahrens sieht zudem vor, dass das Trennen der Glastafeln durch mechanisches Ritzen und durch das Aufheizen der Verbundfolie erfolgt. Die beiden Glastafeln werden folglich zunächst mechanisch geritzt. Durch das schnelle Aufheizen der Verbundfolie zum Trennen der Verbundfolie entstehen Druckspannungen in der Folie und Zugspannungen in den Glastafeln. Die Zugspannungen im Glas sind dann groß genug, insbesondere bei dünnen Glastafeln, das die Glastafel entlang der Ritzlinie automatisch brechen.

Ferner ist gemäß einer Ausgestaltung vorgesehen, dass das Trennen der Glastafeln durch Ritzen mit mindestens einem Laser, insbesondere durch Filamentieren, und durch das Aufheizen der Verbundfolie erfolgt. Die Glastafeln werden folglich zunächst entlang der mindestens einen Aufteilungslinie durch einen Laser mechanisch geschwächt. Vorzugsweise erfolgt das mechanische Schwächen durch Filamentieren.

Beispielsweise erfolgt das Filamentieren mit einem Laser mit einer Laserwellenlänge von 1 µm oder darunter. Beim Filamentieren werden ultrakurze Laserpulse verwendet, um im Laserfokus eine Schwellintensität zu überschreiten. Dadurch kommt es, trotzdem die Glastafeln diese Wellenlängen eigentlich nicht absorbieren, zur Absorption der Laserstrahlung. Das Filamentieren nutzt sogenannte nichtlinear-optische Effekte in den Glastafeln. Bei der Absorption entsteht entlang der Aufteilungslinie eine Art Spannungsvorhang, an dem die Glastafeln brechen. Wie auch beim thermisch induzierten Lasertrennen funktioniert das Filamentieren am besten mit Glastafeln mit höherer Ausdehnung, da eingebrachte lokale Spannungen schneller zum gezielten Bruch führen. Anschließend erfolgt das finale Brechen der Glastafeln durch die im Rahmen des Aufheizens der Verbundfolie eingebrachten Spannungen.

Im Rahmen des Verfahrens erstreckt sich die Mehrzahl von Einzelintensitätsprofilen, insbesondere Einzellaserlinien oder die Laserlinie, vorteilhaft entlang der gesamten Länge der Aufteilungslinie oder entlang eines Abschnitts der Aufteilungslinie, wie vorstehend für die Vorrichtung beschrieben.

Die Aufgabe ist ferner gelöst mit einer Vorrichtung zum Bearbeiten, insbesondere einer Verbundsicherheitsglastafel, entlang mindestens einer vorgebbaren Bearbeitungslinie. Die Bearbeitungslinie ist beispielsweise die Aufteilungslinie oder eine Linie, entlang der mindestens zwei Abschnitte einer Verbundsicherheitsglastafel verbunden oder ein anderes Material aufgeheizt werden soll. Die Vorrichtung weist mindestens ein Heizmittel zum Aufheizen zumindest entlang eines Abschnitts der Bearbeitungslinie auf, das mindestens eine Lasereinrichtung mit zumindest einer Mehrzahl von nebeneinander angeordneten Laserstrahlungsquellen aufweist.

Mit der Lasereinrichtung ist eine Mehrzahl von nebeneinander angeordneten Einzelintensitätsprofilen zum Aufheizen zumindest entlang eines Abschnitts der Bearbeitungslinie erzeugbar. Die Vorrichtung weist ferner die vorbeschriebenen Merkmale und Ausgestaltungen auf, die vorstehend für die Vorrichtung zum Trennen beschrieben worden sind. Insbesondere gilt dies für die Art, Ausgestaltung und Anordnung der Lasereinrichtung sowie insbesondere die Oszillation oder Verfahrbarkeit. Die Beschreibung in Bezug auf die Aufteilungslinie kann auf eine Bearbeitungslinie übertragen werden. Ferner kann das Aufheizen der Verbundfolie auf jedes beliebige Material übertragen werden, dass entlang einer Bearbeitungslinie aufgeheizt werden soll und Laserstrahlung absorbiert.

Insbesondere hat sich die Verwendung einer vorbeschriebenen Vorrichtung zum Verbinden von mindestens zwei Abschnitten von Verbundsicherheitsglas als vorteilhaft herausgestellt, insbesondere um die Verbundfolie zum Verbinden aufzuwärmen.

Ferner kann die Vorrichtung zum Vorheizen, insbesondere einer Verbundfolie, entlang einer Bearbeitungslinie, insbesondere einer Aufteilungslinie, verwendet werden. Beispielsweise erfolgt nach dem Vorheizen ein Energieeintrag entlang der Bearbeitungslinie durch andere Mittel, beispielsweise durch einen fokussierten Laser.

Im Einzelnen gibt es nun eine Vielzahl von Möglichkeiten, die erfindungsgemäße Vorrichtung und das Verfahren auszugestalten und weiterzubilden. Dazu wird verwiesen sowohl auf die den Patentansprüchen 1 und 11 nachgeordneten Patentansprüche als auch auf die nachfolgende Beschreibung von bevorzugten Ausführungsbeispielen in Verbindung mit der Zeichnung.

In der Zeichnung zeigen:
- Fig. 1: ein Ausführungsbeispiel einer Vorrichtung in teilweise geschnittener Seitenansicht,
- Fig. 2: ein Ausführungsbeispiel einer Vorrichtung in Seitenansicht,
- Fig. 3: einen schematischen Ablauf eines Verfahrens, und
- Fig. 4: ein Ausführungsbeispiel einer Vorrichtung in Seitenansicht.

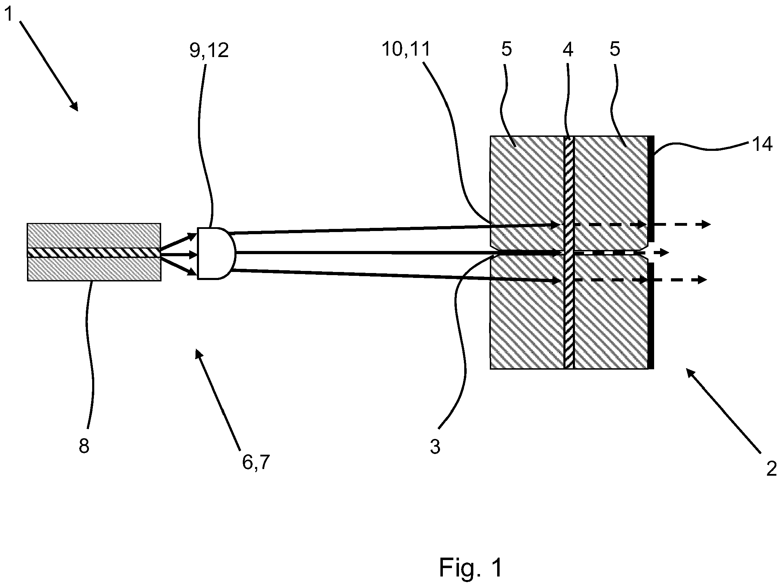

Fig. 1 zeigt ein Ausführungsbeispiel eines Teils einer Vorrichtung 1 zum Trennen einer Verbundsicherheitsglastafel 2 entlang mindestens einer vorgebbaren Aufteilungslinie 3. Die Vorrichtung 1 ist in einer zumindest teilweise geschnittenen Seitenansicht in einer Ebene senkrecht zur Aufteilungslinie dargestellt. Die Verbundsicherheitsglastafel 2 weist mindestens eine Verbundfolie 4 und mindestens zwei Glastafeln 5 auf. Die Verbundfolie 4 ist zwischen den Glastafeln 5 angeordnet und verbindet diese miteinander.

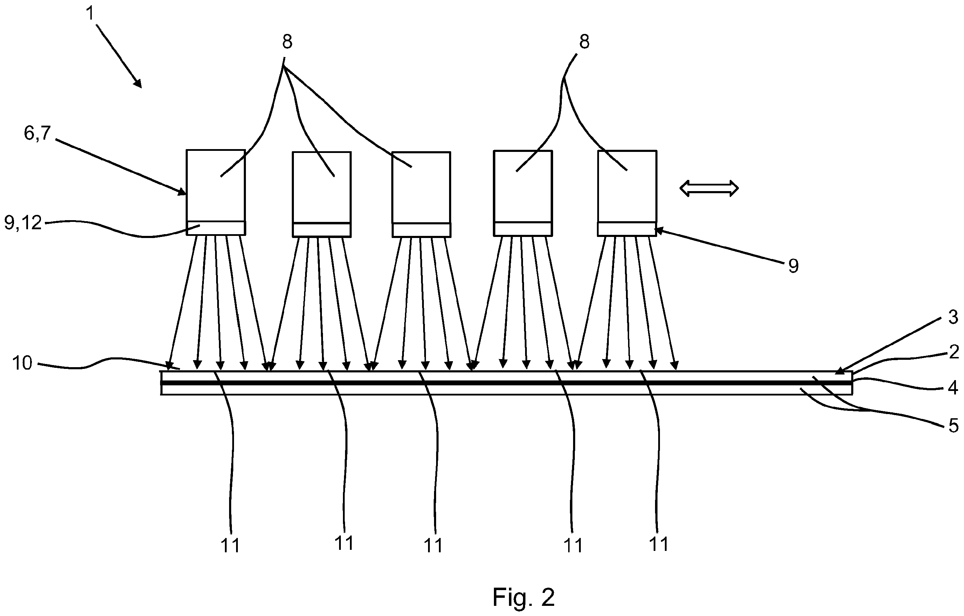

Um die Verbundfolie 4 zumindest entlang der Aufteilungslinie 3 bis zu einer Temperatur aufheizen zu können, bei der die Verbundfolie 4 entlang der Aufteilungslinie 3 ausreichend weich ist, um diese verformen zu können, weist die Vorrichtung 1 ein Heizmittel 6 auf, das bei diesem Ausführungsbeispiel als Lasereinrichtung 7 ausgebildet ist. Die Lasereinrichtung 7 weist eine Mehrzahl von nebeneinander angeordneten Laserstrahlungsquellen 8, in Form von Laserdioden, und eine Strahlformanordnung 9 auf. Die Lasereinrichtung 7 erzeugt eine Mehrzahl an - insbesondere auch in Fig. 2 dargestellten - Einzelintensitätsprofilen 11, die bei diesem Ausführungsbeispiel als Einzellaserlinien ausgebildet sind und mindestens eine Laserlinie 10 entlang der Aufteilungslinie 3 zum Aufheizen der Verbundfolie 4 bilden.

Fig. 1 zeigt eine seitliche Projektionsansicht auf die Laserlinie 10 bzw. ein Einzelintensitätsprofil 11, aus der schematisch erkennbar ist, dass die Strahlformanordnung 9 als Kollimator wirkt und die Laserstrahlung im Wesentlichen parallel - mit leichter Divergenz-, zumindest in Erstreckungsrichtung entlang der Aufteilungslinie 3, ausrichtet, so dass ein Einzelintensitätsprofil 11 bzw. hier eine Laserlinie 10 mit im Wesentlichen konstanter Breite entsteht. Mit der "Breite" des Einzelintensitätsprofils 11 bzw. der Laserlinie 10 ist die Erstreckung orthogonal zur Aufteilungslinie 3 gemeint. Gemäß Fig. 1 ist die Breite des Einzelintensitätsprofils 11 bzw. der Laserlinie 10 schematisch unterhalb und oberhalb der Trennung zwischen den Glastafeln 5 zu erkennen. Die Breite wird auf der Oberfläche der Verbundsicherheitsglastafel 2 gemessen. Eine der Glastafeln 5 weist eine außenliegende Beschichtung 14 auf, an der die Laserstrahlung, die die Verbundsicherheitsglastafel 2 durchtreten hat, zumindest teilweise reflektiert wird.

Fig. 2 zeigt ein Ausführungsbeispiel eines Teils einer Vorrichtung 1 in Seitenansicht. Das Heizmittel 6 in Form der Lasereinrichtung 7 weist eine Mehrzahl von Laserstrahlungsquellen 8 in Form von Laserdioden auf. Die Strahlformanordnung 9 weist bei diesem Ausführungsbeispiel für jede Laserstrahlungsquelle 8 eine separate Linse 12 auf. Fig. 2 zeigt, dass sich die Laserlinie 10 aus einer Mehrzahl von Einzelintensitätsprofilen 11 zusammensetzt, wobei jedes Einzelintensitätsprofil 11 durch eine Laserstrahlungsquelle 8 zusammen mit der jeweiligen Linse 12 gebildet wird. Beispielhaft ist jedes Einzelintensitätsprofil 11 mit einer Mehrzahl an von der Laserstrahlungsquelle 8 ausgehenden Pfeilen dargestellt. Die Einzelintensitätsprofile 11 sind als Einzellaserlinien ausgebildet. Durch die Überlappung der Einzelintensitätsprofile11 bzw. der Einzellaserlinien in ihren Randbereichen entlang der Aufteilungslinie 3 wird eine im Wesentlichen homogene Strahlungsintensität im Verlauf der Laserlinie 10 gewährleistet. Die Laserlinie 10 weist vorzugsweise eine Breite von etwa 3 mm auf.

Die Lasereinrichtungen 7 sind gruppenweise in Richtung des dargestellten Doppelpfeils oszillierbar und/oder verfahrbar gehalten. Entweder oszillieren die Lasereinrichtungen 7 zur Homogenisierung der Strahlungsintensität der Laserlinie 10 oder die Lasereinrichtungen 7 werden entlang der Erstreckung der Aufteilungslinie 3 verfahren, um die Verbundfolie 4 entlang der Aufteilungslinie 3 aufzuheizen.

Die Linsen 12 sind als Zylinderlinsen, insbesondere asphärische Zylinderlinsen, ausgebildet. Die Linsen 12 wirken als Kollimator und sorgen dafür, dass die von den Laserstrahlungsquellen 8 emittierte Strahlung als im Wesentlichen paralleler Strahl in der Ebene, die senkrecht zur Aufteilungslinie aufgespannt wird - mit leichter Divergenz - mit im Wesentlichen konstanter Breite auf die Oberfläche der Verbundsicherheitsglastafel 2 auftrifft, so dass die Laserlinie 10 entlang der Aufteilungslinie 3 wirkt, um die Verbundfolie 4 aufzuheizen. Die Lasereinrichtung 7 ist derart gehalten, dass der Abstand zwischen den Linsen 12 und der Verbundfolie 4 im Betrieb etwa 70 mm beträgt. Da die Laserlinie 10 durch zumindest zur Begrenzung der Breite der Laserlinie 10 parallele Strahlen gebildet ist, ist eine geringe Veränderung des Abstands im Betrieb von keiner Bedeutung für das Aufheizen.

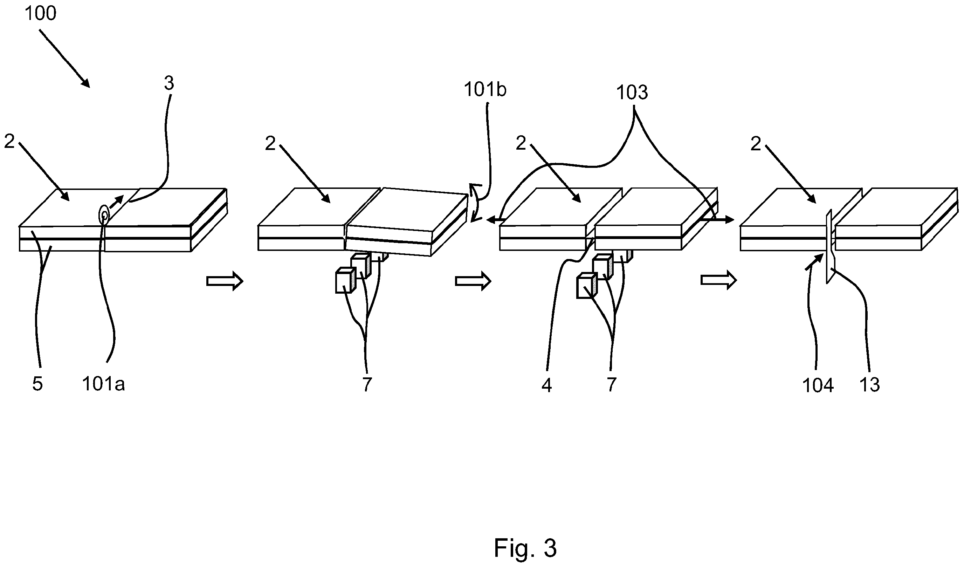

Fig. 3 zeigt schematisch den Ablauf eines Verfahrens 100 zum Trennen einer Verbundsicherheitsglastafel 2 entlang mindestens einer Aufteilungslinie 3. Gemäß dem Verfahren 100 erfolgt zunächst das Trennen 101 der Glastafeln 5, bei diesem Ausführungsbeispiel durch mechanisches Ritzen 101a und anschließendes Brechen 101b jeder Glastafel 5. Nachfolgend oder bereits während des Brechens 101b erfolgt ein Aufheizen 102 der Verbundfolie 4 entlang der Aufteilungslinie 3 mittels der aus Einzelintensitätsprofilen 11 gebildeten Laserlinie 10, die mit der Lasereinrichtung 7 mit einer Mehrzahl nebeneinander angeordneter Laserstrahlungsquellen 8 und mindestens einer Strahlformanordnung 9 erzeugt wird. Sobald die Verbundfolie 4 auf die erforderliche Temperatur von beispielsweise etwa 170°C aufgeheizt ist, erfolgt ein Auseinanderziehen 103 der Glastafeln 5 durch Aufbringen einer Trennkraft an den Glastafeln 5 bzw. durch Festhalten eines Teils der Verbundsicherheitsglastafel 2 und durch Aufbringen einer Kraft an dem anderen Teil der Verbundsicherheitsglastafel 2. Anschließend erfolgt ein Trennen 104 der Verbundfolie 4, bei diesem Ausführungsbeispiel durch Schneiden mit einer Klinge 13, wodurch die Verbundsicherheitsglastafel 2 entlang der Aufteilungslinie 3 abschließend geteilt wird. Alternativ dazu ist auch vorgesehen, dass das Trennen 104 der Verbundfolie 4 durch das Auseinanderziehen 103 nach dem Aufheizen 102 erfolgt. Die aufgeheizte und dadurch plastisch gut verformbare Verbundfolie 4 wird folglich entlang der Aufteilungslinie 3 auseinandergerissen.

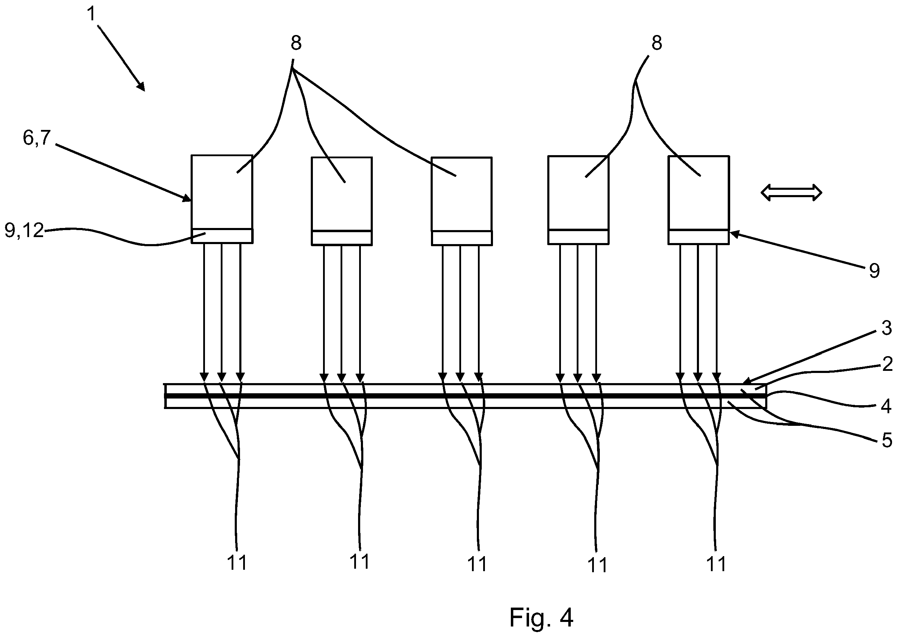

Fig. 4 zeigt ein Ausführungsbeispiel eines Teils einer Vorrichtung 1 in Seitenansicht.

Das Heizmittel 6 in Form der Lasereinrichtung 7 weist eine Mehrzahl von Laserstrahlungsquellen 8 auf. Die Strahlformanordnung 9 weist bei diesem Ausführungsbeispiel für jede Laserstrahlungsquelle 8 eine separate Linse 12 auf. Jede Laserstrahlungsquelle 8 emittiert bei diesem Ausführungsbeispiel jeweils drei beabstandet zueinander angeordnete Einzelintensitätsprofile 11, die in Fig. 4 beispielhaft als drei separate Pfeile dargestellt sind. Die Einzelintensitätsprofile 11 von zwei benachbarten Lasereinrichtungen 7 - Laserstrahlungsquelle 8 und Strahlformanordnung 9, insbesondere Linse 12, sind ebenfalls zueinander beanstandet. Dieser Abstand kann auch so gewählt werden, dass er dem Abstand zwischen zwei Einzelintensitätsprofilen 11 einer Lasereinrichtung 7 entspricht, so dass alle Einzelintensitätsprofile 11 entlang der Aufteilungslinie 3 einen gleichen Abstand aufweisen. Die Einzelintensitätsprofile 11 weisen vorzugsweise eine Breite von etwa 3 mm orthogonal zur Aufteilungslinie 3 auf.

Die Lasereinrichtungen 7 sind in Richtung des dargestellten Doppelpfeils oszillierbar gehalten. Die Lasereinrichtungen 7 oszillieren derart, dass der Energieeintrag von zwei benachbarten Einzelintensitätsprofilen 11 von zwei benachbarten Lasereinrichtungen 7 aneinander angrenzt oder sich überdeckt, so dass ein im Wesentlichen homogener Energieeintrag zum Aufheizen der Verbundfolie 4 entlang des Verlaufs der Aufteilungslinie 3 gewährleistet ist.

Die Linsen 12 sind als Zylinderlinsen, insbesondere asphärische Zylinderlinsen, ausgebildet. Die Linsen 12 wirken als Kollimator und sorgen dafür, dass die von den Laserstrahlungsquellen 8 emittierte Strahlung als im Wesentlichen paralleler Strahl in der Ebene, die senkrecht zur Aufteilungslinie aufgespannt wird - mit leichter Divergenz - mit im Wesentlichen konstanter Breite auf die Oberfläche der Verbundsicherheitsglastafel 2 auftrifft, so dass die Einzelintensitätsprofile 11 entlang der Aufteilungslinie 3 wirken, um die Verbundfolie 4 aufzuheizen. Die Lasereinrichtung 7 ist derart gehalten, dass der Abstand zwischen den Linsen 12 und der Verbundfolie 4 im Betrieb etwa 70 mm beträgt.

### Bezugszeichen

- 1: Vorrichtung
- 2: Verbundsicherheitsglastafel
- 3: Aufteilungslinie
- 4: Verbundfolie
- 5: Glastafeln
- 6: Heizmittel
- 7: Lasereinrichtung
- 8: Laserstrahlungsquelle
- 9: Strahlformanordnung
- 10: Laserlinie
- 11: Einzelintensitätsprofil
- 12: Linsen
- 13: Klinge
- 14: Beschichtung

- 100: Verfahren
- 101: Trennen der Glastafeln 5
- 101 a: Ritzen
- 101 b: Brechen
- 102: Aufheizen
- 103: Auseinanderziehen
- 104: Trennen der Verbundfolie 4

## Patentansprüche

1. Vorrichtung (1) zum Trennen einer Verbundsicherheitsglastafel (2) entlang mindestens einer vorgebbaren Aufteilungslinie (3), wobei die Verbundsicherheitsglastafel (2) mindestens eine Verbundfolie (4) und mindestens zwei Glastafeln (5) aufweist, wobei die Verbundfolie (4) zwischen den Glastafeln (5) angeordnet ist und die Glastafeln (5) miteinander verbindet, mit mindestens einem Trennmittel zum Trennen der Glastafeln (5) entlang der mindestens einen Aufteilungslinie (3) und mindestens einem Heizmittel (6) zum Aufheizen der Verbundfolie (4) zumindest entlang der Aufteilungslinie (3),
wobei
das Heizmittel (6) mindestens eine Lasereinrichtung (7) mit zumindest einer Mehrzahl von nebeneinander angeordneten Laserstrahlungsquellen (8) aufweist, **dadurch gekennzeichnet, dass** mit der Lasereinrichtung (7) eine Mehrzahl von nebeneinander angeordneten Einzelintensitätsprofilen (11) zum Aufheizen der Verbundfolie (4) zumindest entlang eines Abschnitts der Aufteilungslinie (3) erzeugbar ist.

2. Vorrichtung nach Anspruch 1,
**dadurch gekennzeichnet, dass**
die Mehrzahl von nebeneinander angeordneten Einzelintensitätsprofilen (11) eine Laserlinie (10) bildet, insbesondere dass die Einzelintensitätsprofile (11) in ihren Randbereichen zumindest teilweise überlappend angeordnet sind, um die Laserlinie (10) zu bilden, bevorzugt dass eine Länge eines Einzelintensitätsprofils (11) etwa dem 2-fachen bis 20-fachen der Breite eines Einzelintensitätsprofils (11) entspricht.

3. Vorrichtung (1) nach Anspruch 1 oder 2,
**dadurch gekennzeichnet, dass**
die Lasereinrichtung (7) mindestens eine Strahlformanordnung (9) zur Bildung der Einzelintensitätsprofile (11) aufweist, insbesondere dass die Strahlformanordnung (9) mindestens eine Linsenanordnung aufweist, bevorzugt dass die Linsenanordnung mindestens eine Linse (12) für eine Mehrzahl an Laserstrahlungsquellen (8) aufweist oder mindestens eine Linse (12) für jede Laserstrahlungsquelle (8) aufweist.

4. Vorrichtung (1) nach Anspruch 3,
**dadurch gekennzeichnet, dass**
die Strahlformanordnung (9) die Einzelintensitätsprofile (11), insbesondere die Laserlinie (10), aus zumindest in einer Achsrichtung im Wesentlichen paralleler Laserstrahlung, insbesondere aus zumindest in einer Achsrichtung vollständig paralleler Laserstrahlung, bildet.

5. Vorrichtung (1) nach einem der Ansprüche 1 bis 4,
**dadurch gekennzeichnet, dass**
die Länge der Summe der Mehrzahl von Einzelintensitätsprofilen (11), insbesondere die Länge der Laserlinie (10), mindestens dem 30-fachen der Breite eines Einzelintensitätsprofils (11) entspricht, insbesondere zwischen dem 30-fachen und dem 1700-fachen, bevorzugt zwischen dem 30-fachen und dem 333-fachen der Breite, oder dass die Länge der Summe der Mehrzahl von Einzelintensitätsprofilen (11), insbesondere der Laserlinie (10), mindestens der Länge der Aufteilungslinie (3) entspricht.

6. Vorrichtung (1) nach einem der Ansprüche 1 bis 5,
**dadurch gekennzeichnet, dass**
die Einzelintensitätsprofile (11), insbesondere die Laserlinie (10), gerade sind oder dass mindestens ein Einzelintensitätsprofil (11), insbesondere die Laserlinie (10), zumindest abschnittsweise eine Krümmung aufweist und/oder dass jede Laserstrahlungsquelle (8) mindestens eine Laserdiode aufweist, insbesondere dass jede Laserstrahlungsquelle (8) eine Anordnung einer Mehrzahl von Laserdioden aufweist, vorzugsweise ein Laserdioden-Stack aufweist.

7. Vorrichtung (1) nach einem der Ansprüche 1 bis 6,
**dadurch gekennzeichnet, dass**
die Leistung einer Laserstrahlungsquelle (8) zwischen 5 W und 50 W beträgt und/oder dass die Wellenlänge der von einer Laserstrahlungsquelle (8) emittierten Laserstrahlung zwischen 1200 nm und 2200 nm beträgt, insbesondere zwischen 1300 nm und 2100 nm.

8. Vorrichtung (1) nach einem der Ansprüche 1 bis 7,
**dadurch gekennzeichnet, dass**
zumindest ein Teil der Lasereinrichtung (7), insbesondere die Laserstrahlungsquellen (8) und/oder die Strahlformanordnung (9), oszillierbar und/oder verfahrbar gehalten ist, insbesondere in Längsrichtung der Aufteilungslinie (3) oszillierbar und/oder verfahrbar gehalten ist.

9. Vorrichtung (1) nach einem der Ansprüche 1 bis 8,
**dadurch gekennzeichnet, dass**
die Laserstrahlungsquellen (8) einzeln steuerbar sind, vorzugsweise dass die Laserstrahlungsquellen (8) gruppenweise steuerbar sind, um die Anzahl der Einzelintensitätsprofile (11) oder um die Länge der Laserlinie (10) einzustellen.

10. Verfahren (100) zum Trennen einer Verbundsicherheitsglastafel (2), wobei die Verbundsicherheitsglastafel (2) mindestens eine Verbundfolie (4) und mindestens zwei Glastafeln (5) aufweist, wobei die Verbundfolie (4) zwischen den Glastafeln (5) angeordnet ist und die Glastafeln (5) miteinander verbindet, umfassend die Verfahrensschritte:
- Trennen (101), insbesondere mechanisches Ritzen (101a) und Brechen (101b), der beiden Glastafeln (5) entlang mindestens einer vorgebbaren Aufteilungslinie (3),
- Aufheizen (102) der Verbundfolie (4) entlang der Aufteilungslinie (3),
- Auseinanderziehen (103) der Glastafeln (5) entlang der Aufteilungslinie (3),
- Trennen (104) der Verbundfolie (4),
wobei das Aufheizen (102) der Verbundfolie (4) mit einer Mehrzahl von nebeneinander angeordneten Einzelintensitätsprofilen (11) entlang zumindest eines Abschnitts der Aufteilungslinie (3) mit einer Lasereinrichtung (7) mit zumindest einer Mehrzahl nebeneinander angeordneter Laserstrahlungsquellen (8) erfolgt.

11. Verfahren (100) nach Anspruch 10,
**dadurch gekennzeichnet, dass**
die Mehrzahl von Einzelintensitätsprofilen (11) gemeinsam eine Laserlinie (10) bildet.

12. Verfahren (100) nach Anspruch 10 oder 11,
**dadurch gekennzeichnet, dass**
das Aufheizen (102) der Verbundfolie (4) vor dem Auseinanderziehen (103) der Glastafeln (5) erfolgt und/oder dass das Trennen (104) der Verbundfolie (4) durch das Auseinanderziehen (103) nach dem Aufheizen (102) erfolgt und/oder, dass das Aufheizen (102) der Verbundfolie (4) zumindest teilweise während des Trennens (101), insbesondere des Brechens (101b), der beiden Glastafeln (5) erfolgt.

13. Verfahren (100) nach einem der Ansprüche 10 bis 12,
**dadurch gekennzeichnet, dass**
das Trennen (101) der Glastafeln (5) durch mechanisches Ritzen (101a) und durch das Aufheizen (102) der Verbundfolie (4) erfolgt oder dass das Trennen (101) der Glastafeln (5) durch Ritzen, insbesondere Filamentieren, mit mindestens einem Laser und durch das Aufheizen (102) der Verbundfolie (4) erfolgt.

14. Verfahren (100) nach einem der Ansprüche 10 bis 13,
**dadurch gekennzeichnet, dass**
zumindest ein Teil der Lasereinrichtung (7), insbesondere die Laserstrahlungsquellen (8) und/oder die Strahlformanordnung (9), zumindest während des Aufheizens (102) oszilliert oder verfahren wird, insbesondere in Längsrichtung der Aufteilungslinie (3) oszilliert oder verfahren wird.

15. Verfahren (100) nach einem der Ansprüche 10 bis 14,
**dadurch gekennzeichnet, dass**
die Länge der Summe der Mehrzahl von Einzelintensitätsprofilen (11), insbesondere die Länge der Laserlinie (10), mindestens dem 30-fachen der Breite eines Einzelintensitätsprofils (11) entspricht, insbesondere zwischen dem 30-fachen und dem 1700-fachen, bevorzugt zwischen dem 30-fachen und dem 333-fachen der Breite, oder dass die Länge der Summe der Mehrzahl von Einzelintensitätsprofilen (11), insbesondere der Laserlinie (10), mindestens der Länge der Aufteilungslinie (3) entspricht.

## Claims

1. A device (1) for separating a composite safety glass panel (2) along at least one predefinable dividing line (3), wherein the composite safety glass panel (2) has at least one composite film (4) and at least two glass panels (5), wherein the composite film (4) is placed between the glass panels (5) and bonds the glass panels (5) to one another, having at least one separating means for separating the glass panels (5) along the at least one dividing line (3) and at least one heating means (6) for heating the composite film (4) at least along the dividing line (3), wherein the heating means (6) contains at least one laser device (7) that has at least multiple adjacently arranged laser beam sources (8),
**characterized in that**
multiple adjacently arranged individual intensity profiles (11) can be generated with the laser device (7) to heat the composite film (4) at least along a segment of the dividing line (3).

2. The device according to claim 1,
**characterized in that**
the multiple adjacently arranged individual intensity profiles (11) form a laser line (10), in particular that the individual intensity profiles (11) overlap at least in part in their edge regions, in order to form the laser line (10), preferably such that a length of an individual intensity profile (11) corresponds to approx. 2 times to 20 times the width of an individual intensity profile (11).

3. The device (1) according to claims 1 or 2,
**characterized in that**
the laser device (7) contains at least one beam-shaping assembly (9) for forming the individual intensity profiles (11), in particular **in that** the beam-shaping assembly (9) contains at least one lens assembly, preferably **in that** the lens assembly contains a lens (12) for multiple laser beam sources (8), or contains at least one lens (12) for each laser beam source (8).

4. The device (1) according to any of the claims 1 to 3,
**characterized in that**
the beam-shaping assembly (9) forms the individual intensity profiles (11), in particular the laser lines (10), from substantially parallel laser radiation in the direction of at least one axis, in particular from entirely parallel laser radiation in the direction of at least one axis.

5. The device (1) according to any of the claims 1 to 4,
**characterized in that**
the combined length of the multiple individual intensity profiles (11), in particular the length of the laser line (10), corresponds to 30 times the width of an individual intensity profile (11), in particular between 30 times and 1700 times, preferably between 30 times and 333 times the width, or that the combined length of the multiple individual intensity profiles (11), in particular the laser line (10), corresponds to at least the length of the dividing line (3).

6. The device (1) according to any of the claims 1 to 5,
**characterized in that**
the individual intensity profiles (11), in particular the laser line (10), are straight, or **in that** at least one individual intensity profile (11), in particular the laser line (10), is curved, at least in part and/or **in that** each laser beam source (8) contains at least one laser diode, in particular **in that** each laser beam source (8) contains an arrangement of multiple laser diodes, preferably a laser diode stack.

7. The device according to any of the claims 1 to 6,
**characterized in that**
the output of the laser beam source (8) is between 5 W and 50 W, and/or **in that** the wavelength of the laser radiation emitted from the laser beam source (8) is between 1200 nm and 2200 nm, in particular between 1300 nm and 2100 nm.

8. The device (1) according to any of the claims 1 to 7,
**characterized in that**
at least a part of the laser device (7), in particular the laser beam sources (8) and/or the beam-shaping assembly (9), is supported such that it can oscillate and/or move, in particular in the longitudinal direction of the dividing line (3).

9. The device (1) according to any of the claims 1 to 8,
**characterized in that**
the laser beam sources (8) can be controlled individually, preferably **in that** the laser beam sources (8) can be controlled in groups, in order to set the number of individual intensity profiles (11) or the length of the laser line (10).

10. A method (100) for separating a composite safety glass panel (2), wherein the composite safety glass panel (2) contains at least one composite film (4) and at least two glass panels (5), wherein the composite film (4) is placed between the glass panels (4) and bonds the glass panels (5) to one another, comprising the steps:
- separating (101), in particular mechanical scoring (101a) and breaking (101b), the two glass panels (5) along at least one predefinable dividing line (3);
- heating (102) the composite film (4) along the dividing line (3);
- pulling apart (103) the glass panels (5) along the dividing line (3); and
- separating (104) the composite film (4);
wherein the composite film (4) is heated with multiple adjacently arranged individual intensity profiles (11) along at least one segment of the dividing line (3) with a laser device (7) that has at least multiple adjacently arranged laser beam sources (8).

11. The method (100) according to claim 10,
**characterized in that**
the multiple individual intensity profiles (11) collectively form a laser line (10).

12. The method (100) according to claim 10 or 11,
**characterized in that**
the composite film (4) is heated prior to pulling apart (103) the glass panels (5) and/or that .the composite film (4) is separated (104) by the pulling apart (103) after the heating (102) thereof and/or that the composite film (4) is heated (102) at least in part during the separation (101), in particular the breaking (101b), of the two glass panels (5).

13. The method (100) according to any of the claims 10 to 12,
**characterized in that**
the glass panels (5) are separated by the mechanical scoring (101a) and by the heating (102) of the composite film (4), or that the glass panels (4) are separated (101) by scoring, in particular filamentation, with at least one laser, and by heating the composite film (4).

14. The method (100) according to any of the claims 10 to 13,
**characterized in that**
at least a part of the laser device (7), in particular the laser beam sources (8) and/or the beam-shaping assembly (9), at least during the heating (102), is oscillated or moved, in particular in the longitudinal direction of the dividing line (3).

15. The method (100) according to any of the claims 10 to 14,
**characterized in that**
the combined length of the multiple individual intensity profiles (11), in particular the length of the laser line (10), corresponds to at least 30 times the width of the individual intensity profiles (11), in particular between 30 times and 1700 times, preferably between 30 times and 333 times the width, or the combined length of the multiple individual intensity profiles (11), in particular the laser line (10), corresponds to at least the length of the dividing line (3).

## Revendications

1. Dispositif (1) de séparation d'un panneau de verre de sécurité feuilleté (2) le long d'au moins une ligne de partage (3) pouvant être prédéfinie, dans lequel le panneau de verre de sécurité feuilleté (2) présente au moins un film feuilleté (4) et au moins deux panneaux de verre (5), dans lequel le film feuilleté (4) est agencé entre les panneaux de verre (5) et relie les panneaux de verre (5) entre eux, avec au moins un moyen de séparation pour la séparation des panneaux de verre (5) le long d'au moins une ligne de partage (3) et au moins un moyen de chauffage (6) pour le chauffage du film feuilleté (4) au moins le long de la ligne de partage (3),
dans lequel le moyen de chauffage (6) présente au moins un dispositif laser (7) avec au moins une pluralité de sources de rayonnement laser (8) agencées les unes à côté des autres, **caractérisé en ce qu'**avec le dispositif laser (7) une pluralité de profilés d'intensité individuels (11) agencés les uns à côté des autres peut être générée pour le chauffage du film feuilleté (4) au moins le long d'une section de la ligne de partage (3).

2. Dispositif selon la revendication 1,
**caractérisé en ce que**
la pluralité de profilés d'intensité individuels (11) agencés les uns à côté des autres forme une ligne de laser (10), en particulier **en ce que** les profilés d'intensité individuels (11) sont agencés se chevauchant au moins partiellement dans leurs zones de bord afin de former la ligne de laser (10), de préférence qu'une longueur d'un profilé d'intensité individuel (11) correspond à environ deux fois à vingt fois la largeur d'un profilé d'intensité individuel (11).

3. Dispositif (1) selon la revendication 1 ou 2,
**caractérisé en ce que**
le dispositif laser (7) présente au moins un agencement de formation de faisceau (9) pour la formation des profilés d'intensité individuels (11), en particulier **en ce que** l'agencement de formation de faisceau (9) présente au moins un agencement de lentille, de préférence **en ce que** l'agencement de lentille présente au moins une lentille (12) pour une pluralité de sources de rayonnement laser (8) ou présente au moins une lentille (12) pour chaque source de rayonnement laser (8).

4. Dispositif (1) selon la revendication 3,
**caractérisé en ce que**
l'agencement de formation de faisceau (9) forme les profilés d'intensité individuels (11), en particulier la ligne de laser (10) à partir d'au moins un rayonnement laser sensiblement parallèle dans le sens axial, en particulier à partir d'au moins un rayonnement laser complètement parallèle dans un sens axial.

5. Dispositif (1) selon l'une des revendications 1 à 4,
**caractérisé en ce que**
la longueur de la somme de la pluralité de profilés d'intensité individuels (11), en particulier la longueur de la ligne de laser (10), correspond au moins à 30 fois la largeur d'un profilé d'intensité individuel (11), en particulier entre 30 fois et 1 700 fois, de préférence entre 30 fois et 333 fois la largeur ou **en ce que** la longueur correspond à la somme de la pluralité de profilés d'intensité individuels (11), en particulier la ligne de laser (10), au moins à la longueur de la ligne de partage (3).

6. Dispositif (1) selon l'une des revendications 1 à 5,
**caractérisé en ce que**
les profilés d'intensité individuels (11), en particulier la ligne de laser (10), sont droits ou qu'au moins un profilé d'intensité individuel (11), en particulier la ligne de laser (10) présente au moins par section une courbure et/ou **en ce que** chaque source de rayonnement laser (8) présente au moins une diode laser, en particulier **en ce que** chaque source de rayonnement laser (8) présente un agencement d'une pluralité de diodes laser, de préférence une pile de diodes laser.

7. Dispositif (1) selon l'une des revendications 1 à 6,
**caractérisé en ce que**
la puissance d'une source de rayonnement laser (8) s'élève entre 5 W et 50 W et/ou **en ce que** la longueur d'onde du rayonnement laser émis par une source de rayonnement laser (8) s'élève entre 1 200 nm et 2 200 nm, en particulier entre 1 300 nm et 2 100 nm.

8. Dispositif (1) selon l'une des revendications 1 à 7,
**caractérisé en ce que**
au moins une partie du dispositif laser (7), en particulier les sources de rayonnement laser (8) et/ou l'agencement de formation de faisceau (9), est maintenue oscillante et/ou déplaçable, en particulier est maintenue oscillante et/ou déplaçable dans le sens longitudinal de la ligne de partage (3).

9. Dispositif (1) selon l'une des revendications 1 à 8,
**caractérisé en ce que**
les sources de rayonnement laser (8) sont commandables individuellement, de préférence **en ce que** les sources de rayonnement laser (8) sont commandables par groupe afin de régler le nombre des profilés d'intensité individuels ou la longueur de la ligne de laser (10).

10. Procédé (100) de séparation d'un panneau de verre de sécurité feuilleté (2), dans lequel le panneau de verre de sécurité feuilleté (2) présente au moins un film feuilleté (4) et au moins deux panneaux de verre (5), dans lequel le film feuilleté (4) est agencé entre les panneaux de verre (5) et relie les panneaux de verre (5) entre eux, comprenant les étapes de procédé suivantes :
- la séparation (101), en particulier l'incision mécanique (101a) et la rupture (101b), des deux panneaux de verre (5) le long d'au moins une ligne de partage (3) pouvant être prédéfinie,
- le chauffage (102) du film feuilleté (4) le long de la ligne de partage (3),
- l'étirage (103) des panneaux de verre (5) le long de la ligne de partage (3),
- la séparation (104) du film feuilleté (4),
dans lequel le chauffage (102) du film feuilleté (4) est effectué avec une pluralité de profilés d'intensité individuels (11) agencés les uns à côté des autres le long d'au moins une section de la ligne de partage (3) avec un dispositif laser (7) avec au moins une pluralité de sources de rayonnement laser (8) agencées les unes à côté des autres.

11. Procédé (100) selon la revendication 10,
**caractérisé en ce que**
la pluralité de profilés d'intensité individuels (11) forme ensemble une ligne de laser.

12. Procédé (100) selon la revendication 10 ou 11,
**caractérisé en ce que**
le chauffage (102) du film feuilleté (4) est effectué avant l'étirage (103) des panneaux de verre (5) et/ou **en ce que** la séparation (104) du film feuilleté (4) est effectuée par l'étirage (103) après le chauffage (102) et/ou **en ce que** le chauffage (102) du film feuilleté (4) est effectué au moins partiellement pendant la séparation (101), en particulier la rupture (101b), des deux panneaux de verre (5).

13. Procédé (100) selon l'une des revendications 10 à 12,
**caractérisé en ce que**
la séparation (101) des panneaux de verre (5) est effectuée par l'incision (101a) mécanique et par le chauffage (102) du film feuilleté (4) ou **en ce que** la séparation (101) des panneaux de verre (5) est effectuée par l'incision, en particulier la formation de filament, avec au moins un laser et par le chauffage (102) du film feuilleté (4).

14. Procédé (100) selon l'une des revendications 10 à 13,
**caractérisé en ce que**
au moins une partie du dispositif laser (7), en particulier les sources de rayonnement laser (8) et/ou l'agencement de formation de faisceau (9), oscille ou est déplacé au moins pendant le chauffage (102), en particulier dans le sens longitudinal de la ligne de partage (3).

15. Procédé (100) selon l'une des revendications 10 à 14,
**caractérisé en ce que**
la longueur de la somme de la pluralité de profilés d'intensité individuels (11), en particulier la longueur de la ligne de laser (10), correspond au moins à 30 fois la largeur d'un profilé d'intensité individuel (11), en particulier entre 30 et 1 700 fois, de préférence entre 30 et 333 fois la largeur, ou **en ce que** la longueur de la somme de la pluralité de profilés d'intensité individuels (11), en particulier la ligne de laser (10), correspond au moins à la longueur de la ligne de séparation (3).
